# EUROPEAN PATENT APPLICATION

(11) **EP 2 262 295 A1**
(43) Date of publication of application: **15.12.2010**
(21) Application number: 10178786.9
(22) Date of filing: 14.12.2005
(51) Int. Cl.: H04W 8/08

(54) **Communication route optimization system and nodes**

(30) Priority: 14.12.2004 JP 2004361997; 18.11.2005 JP 2005334575
(62) Divisional of application: 05819721.1
(71) Applicant: Panasonic Corporation, Kadoma-shi Osaka 571-8501 (JP)
(72) Inventor: Hirano, Jun, Osaka-shi Osaka 540-6207 (JP); Ng, Chan Wah, Osaka-shi Osaka 540-6207 (JP); Koh, Tien-Ming, Osaka-shi Osaka 540-6207 (JP); Tan, Pek Yew, Osaka-shi Osaka 540-6207 (JP)
(74) Representative: Grünecker, Kinkeldey, Stockmair & Schwanhäusser Anwaltssozietät

(57) **Abstract**

It is an object of the present invention that a suitable correspondent router or suitable route is found when route will be optimized between a mobile node (MN) or a mobile router (MR) and a correspondent node (CN) by using a correspondent router (CR). MN 125, the home agent (HA) 140 of MR 120 or a plurality of CRs forms collaborating relation in advance. A member of the collaborating relation maintains addresses of other members belonging to the same collaborating relation. When the address of CN 160 is embedded in the header portion (mobility header) of data 201 from MN or MR, HA refers to its list of other members to search a suitable CR 142 for CN 160. HA sends RBU message 204 including binding information of MN or MR to the found suitable CR 142. Thereby, MN or MR can establish a tunnel with CR and route is optimized.

## Description

### TECHNICAL FIELD

This invention relates to the field of the communication technology using the Internet Protocol (IP). In particular, it relates to the route optimization technology provided in Mobile IPv6.

### BACKGROUND ART

Many devices today communicate with each other using the Internet Protocol (IP). In order to provide mobility support to mobile devices, the IETF (Internet Engineering Task Force) has developed the "Mobility Support in IPv6". In Mobile IP, each mobile node has a permanent home domain. When the mobile node is attached to its home network, it is assigned a primary global address known as a home-address (HoA). When the mobile node is away, i.e. attached to some other foreign networks, it is usually assigned a temporary global address known as a care-of-address (CoA).

The idea of mobility support is such that the mobile node can be reached at the home-address even when it is attached to other foreign networks. This is done in the following Non-patent Document 1 with an introduction of an entity at the home network known as a home agent (HA). Mobile nodes register their care-of-addresses with the home agents using messages known as Binding Updates (BU). This allows the home agent to create a binding between the home-address and the care-of-address of the mobile node. The home agent is responsible to intercept messages that are addressed to the mobile node's home-address, and forward the packet to the mobile node's care-of-address using packet encapsulation (i.e. putting one packet as the payload of a new packet, also known as packet tunneling).

With the ever-increasing proliferation of wireless devices, it is foreseeable that a new class of mobility technology will emerge: network mobility, or NEMO, where a whole network of nodes changes its point of attachment in entirety. Extending the concept of mobility support for individual hosts to mobility support for a network of nodes, the objective of a network in motion solution is to provide a mechanism where nodes in a mobile network can be reached by their primary global addresses, no matter where on the Internet the mobile network is attached to.

The IETF is currently developing solution for network mobility as disclosed in the following Non-patent Document 2. Here, it is specified that the mobile router when sending BU to home agent, will specify the network prefix which the nodes in the mobile network are using. These are specified using special options known as Network Prefix Options to be inserted into the BU. These allow the home-agent to build a prefix-based routing table so that the home-agent will forward any packets sent to destinations with these prefixes to the care-of-address of the mobile router.

By using tunneling techniques, host and network mobility support can be provided with the aid of home agents. However, this also leads to a problem known as sub-optimal routing. This is because when a mobile node communicates with a correspondent node (CN), packets transmitted between them must go through the home agent, instead of following a direct path from the mobile node to the correspondent node. When the mobile node is far away from its home agent, such sub-optimal routing leads to inefficiency and increased packet delays.

For this reason, in the Non-patent Document 1, it is specified that the mobile node can send a BU to the correspondent node. Once the correspondent node knows of the binding between the home-address and the care-of-address of the mobile node, packets traversing between them can be directly routed to and from the care-of-address of the mobile node (without going through the home agent). But this requires the correspondent node to understand and support Mobile IP. Also, when a mobile node needs to communicate with a large number of correspondent nodes, the number of binding updates that it needs to perform will be overwhelming (note: to send BU to a correspondent node, the mobile node needs to perform a procedure known as return routability, or RR, procedure, which involves two extra packet exchanges between the mobile node and the correspondent node prior to the transmission of BU message. The extra packets sent are a Home-Test-Init (or HoTI) and Care-of-Test-Init (or CoTI) messages sent by the mobile node to the correspondent node, and the Home-Test (or HoT) and Care-of-Test (or CoT) messages sent by the correspondent node in response to the HoTI and CoTI messages respectively).

To overcome these problems, the following Patent Document 1 and the following Patent Document 2 both enlist an entity known as foreign agent that are defined in Mobile IP for IPv4. In these solutions, the correspondent nodes are assumed to be mobile itself, thus attaching behind a foreign agent. To achieve route optimization, a tunnel is established between the foreign agent of the mobile node and the foreign agent of the correspondent node. However, these solutions are specific to Mobile IPv4. As there is no longer a concept of foreign agent in Mobile IPv6, it is unclear how these solutions can be applied to Mobile IPv6 and Network Mobility. Most likely, an entity akin to foreign agent will have to be created in such cases. This is somewhat similar to the solutions disclosed in the following Patent Document 3 and the following Non-patent Document 3.

In the Patent Document 3, a routing optimization proxy is described which intercepts the HoTI and CoTI messages sent by the mobile node to the correspondent node. The routing optimization proxy will then complete the return routability procedure on behalf of the correspondent node.

In the Non-Patent Document 3, a correspondent router (CR) is described. When trying to perform route optimization with a correspondent node, the mobile node first tries to discover an appropriate correspondent router that serves the correspondent node in question. Once a correspondent router is determined, the mobile node sends a binding update to the correspondent router. From then on, any packets sent from the mobile node to the correspondent node will be tunneled to the correspondent router, which will then decapsulate the packet and forward the packet to the correspondent node. Similarly, any packet sent from the correspondent node to the mobile node is intercepted by the correspondent router. The correspondent router will then tunnel the packet to the mobile node.
Patent Document 1: Keiichi Shimizu and Yusuke Kinoshita, "Route Optimization Method and Agent Apparatus", US Patent Publication 20020009066A1, 29 May 2001.
Patent Document 2: Jarno Rajahalme, "Route Optimizing Mobile IP Providing Location Privacy", WO 2004/010668, 19 July 2002.
Patent Document 3: Cedric Westphal, "Routing Optimization Proxy in IP Networks", US Patent Publication 20040095913A1, 20 Nov 2002.
Non-Patent Document 1: Johnson, D. B., Perkins, C. E., and Arkko, J., "Mobility Support in IPv6", Internet Engineering Task Force (IETF) Request For Comments (RFC) 3775, June 2004.
Non-Patent Document 2: Devarapalli, V., et. al., "NEMO Basic Support Protocol", IETF Internet Draft: draft-ietf-nemo-basic-03.txt, Work-In-Progress, June 2004.
Non-Patent Document 3: Ryuji Wakikawa and Masafumi Watari, "Optimized Route Cache Protocol", IETF Internet Draft: draft-wakikawa-nemo-orc-00.txt, Work-In-Progress, July 2004.

However, it is not clear how the solution disclosed in the Non-Patent Document 3 can work in the current Mobile IPv6 specification, since correspondent nodes are required to change the destination address. This implies that the correspondent node must still implement the functionality of route optimization procedure, along with the required data structures such as the binding cache entries (BCE). It is also unclear how this solution disclosed will work if the correspondent node is itself mobile.

On the other hand, though the solution disclosed in the Patent Document 3 provides route optimization in a fairly simple way, there are several issues that need to be considered. First, this increases the burden of the mobile node, as it needs to discover the correspondent router. Secondly, because the mobile node discovers the correspondent router by using multicast address, there is no guarantee that the most suitable correspondent router will be selected. Thirdly, there is no mention of how the mobile node can verify that the correspondent router selected is indeed a legitimate correspondent router and not a malicious node.

### DISCLOSURE OF THE INVENTION

To solve the above problems, it is an object of the present invention to overcome or at least substantially ameliorate the afore-mentioned disadvantages and shortcomings of the prior art. Specifically, it is an object of the present invention to provide a means of achieving route optimization regardless of whether the correspondent node supports the route optimization functionalities as specified in Mobile IPv6.

To attain the above object, the present invention provides a communication system comprising a plurality of correspondent routers, the correspondent router being capable to perform router optimization with a mobile node on behalf of a certain network node and managing a predetermined network, the mobile node being outside the predetermined network, the certain network node being inside the predetermined network and communicating with the mobile node, wherein collaborating relation is formed in advance among the plurality of correspondent routers, and wherein the correspondent router belonging to the collaborating relation maintains information on the other correspondent routers belonging to the same collaborating relation.

Also, to attain the above object, the present invention provides a communication route optimization method of optimizing route between a certain network node and a mobile node in a system, the system comprising a plurality of correspondent routers, the correspondent router being capable to perform router optimization with the mobile node on behalf of the certain network node and managing a predetermined network, the mobile node being outside the predetermined network, the certain network node being inside the predetermined network and communicating with the mobile node, the method comprising:
step where all of the plurality of correspondent nodes forming collaborating relation in advance maintain information on the other correspondent routers belonging to the same collaborating relation; and
step where a home agent of the mobile node, the home agent belonging to the same collaborating relation, sends information on binding between an home address and a care-of address of the mobile node to the at least one or more correspondent routers among the correspondent routers which belongs to the collaborating relation.

Also, to attain the above object, the present invention provides an apparatus for assisting route optimization between a certain network node and a mobile node, the certain network node being in a network which a correspondent router represents, the mobile node being outside the network, the apparatus comprising:
information maintaining means for maintaining information on all correspondent routers belonging to a predetermined collaborating relation;
message receiving means for a predetermined message including an address of the certain network node; and
searching means for searching the correspondent router which can act on behalf of the certain network node by referring the information maintained by the information maintaining means.

Also, to attain the above object, the present invention provides a communication node comprising a functionality of performing route optimization with a correspondent node, the communication node being arranged so as to send a predetermined message to request for searching a correspondent router which can act on behalf of the correspondent node to a predetermined node.

Also, to attain the above object, the present invention provides a communication node comprising a functionality of performing route optimization with a correspondent node, the communication node being arranged so as to send a predetermined message including information to identify a plurality of correspondent routers which can act on behalf of a plurality of the correspondent nodes respectively and priority information on each of the correspondent routers in addition to binding information between its own care-of address and its own home address to a predetermined node.

Also, to attain the above object, the present invention provides a communication node communicating with a correspondent node and being located inside a network which is represented by a correspondent router, the correspondent router capable to act on behalf of a network node in the network, the correspondent node comprising a functionality of performing route optimization and being located outside the network, the communication node being arranged so as to respond with a message including information on the correspondent router in order to be route-optimized between the correspondent router and the correspondent node, in receiving a predetermined message transmitted during a route optimization procedure with the correspondent node.

The present invention comprising the foregoing construction allows a suitable correspondent router or suitable route to be found when route will be optimized between a communication node (such as a mobile node or a mobile router) and a correspondent node by using a correspondent router. Especially, the present invention allows route optimization to be performed between a mobile node or a mobile route and a correspondent node whether the correspondent node would support Mobile IPv6 or not.

### BRIEF DESCRIPTION OF THE DRAWINGS

Fig. 1 is a diagram showing an example of system arrangement in the embodiment of the present invention;
Fig. 2 is a sequence-chart showing the first example of message exchange sequence in the embodiment of the present invention;
Fig. 3 is a sequence-chart showing the second example of message exchange sequence in the embodiment of the present invention;
Fig. 4 is a sequence-chart showing the third example of message exchange sequence in the embodiment of the present invention;
Fig. 5 is a diagram showing an example of system arrangement where the specific correspondent router takes part in a plurality of CR-Rings in the embodiment of the present invention;
Fig. 6 is a sequence-chart showing the fourth example of message exchange sequence in the embodiment of the present invention;
Fig. 7 is a diagram showing an example of message format of CR-Req message in the embodiment of the present invention;
Fig. 8 is a diagram showing an example of message format of CR-Res message in the embodiment of the present invention;
Fig. 9 is a diagram showing an example of message format of Binding Update message in the embodiment of the present invention;
Fig. 10 is a diagram showing an example of message format of Binding Acknowledgement message in the embodiment of the present invention;
Fig. 11 is a diagram showing an example of message format of RBU message in the embodiment of the present invention;
Fig. 12 is a diagram showing an example of message format of RBA message in the embodiment of the present invention;
Fig. 13 is a diagram showing an example of message format of RReq message in the embodiment of the present invention;
Fig. 14 is a diagram showing an example of message format of RRes message in the embodiment of the present invention;
Fig. 15 is a flow-chart used when a home agent or a correspondent router processes a received packet in the embodiment of the present invention;
Fig. 16 is a sequence-chart showing the fifth example of message exchange sequence in the embodiment of the present invention;
Fig. 17 is a diagram showing an example of message format of USE-CR message in the embodiment of the present invention;
Fig. 18 is a diagram showing the situation where route is not optimized between the mobile node/router and the correspondent node behind the mobile router in the embodiment of the present invention;
Fig. 19 is a diagram showing the situation where route is sub-optimized between the mobile node/router and the correspondent node behind the mobile router in the embodiment of the present invention;
Fig. 20 is a diagram showing the situation where route is fully optimized between the mobile node/router and the correspondent node behind the mobile router in the embodiment of the present invention;
Fig. 21 is a diagram showing the preferred functional architecture of a correspondent router or a home agent belonging to CR-Ring in the embodiment of the present invention;
Fig. 22 is a diagram showing the preferred functional architecture of a mobile node/router in the embodiment of the present invention;
Fig. 23 is a diagram showing the preferred functional architecture of a mobile node/router which is a member of CR-Ring in the embodiment of the present invention; and
Fig. 24 is a diagram showing the preferred functional architecture of a correspondent node which can send USE-CR message in the embodiment of the present invention.

### BEST MODE FOR CARRYING OUT THE INVENTION

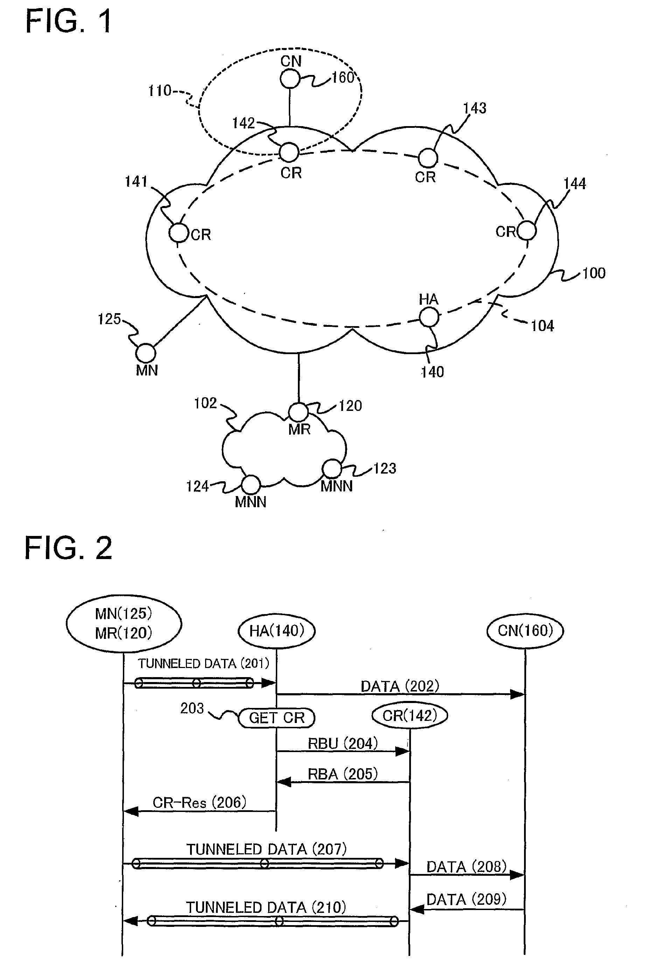

Description will be given below on the preferred aspects of the present invention referring to the drawings. Fig.1 shows a deployment scenario of the correspondent routers (CR). Here, the correspondent routers 141 to 144 are distributed over the global network (such as internet) 100. Each of the correspondent routers 141 to 144 handles a portion of the network, called the correspondent network, in the global network 100 such as internet, where the correspondent router provides correspondent router functionalities (and possibly home agent functionalities as well) to the nodes within the correspondent network. For instance, the correspondent router 142 has a correspondent network 110 as shown in Fig. 1. This means that the correspondent router 142 must be able to intercept packets sent by nodes (for example, correspondent node (CN) 160) in the correspondent network 110 to a specified address, and be able to forward packets from any source to a destination within its correspondent network 110. This usually means that the correspondent router should be a border gateway for the correspondent network. However, the correspondent router can also inject routes into the correspondent network so that even if it is not a border gateway, it is guaranteed to be able to intercept packets sent from a node in the correspondent node to a specified destination.

Here, we consider the route optimization of traffic between the mobile node (MN) 125 and the correspondent node 160. Note that the invention can be equally applied to the mobile router (MR) 120, for the traffic between the mobile network 102 and the correspondent node 160. For simplicity, hereafter we will sometimes use the expression mobile node 120/125 to mean either the mobile node 125 or the mobile router 120. Home agent (HA) 140 serves as the home agent for mobile node 120/125, and correspondent router 142 is handling the correspondent network 110 including the correspondent node 160.

In the following, system and method for the mobile node 120/125 to obtain information of the correspondent router 142 when attempting to perform route optimization with the correspondent node 160 are described. In one preferred embodiment, this object is achieved by having a system of correspondent routers collaborating with each other, thus forming a correspondent router ring, or CR-Ring. A member of the CR-Ring has information of which correspondent router is capable of performing route optimization on behalf of which correspondent nodes. This member can then inform the mobile node 120/125 of the actual correspondent router (i.e. correspondent router 142) for the correspondent node 160. In one variation of this preferred embodiment, the home agent 140 of the mobile node 120/125 is the member of the CR-Ring that informs mobile node 120/125 of this correspondent router 142. In another variation of this preferred embodiment, the mobile node 120/125 is itself a member of the CR-Ring.

In another preferred embodiment of the present invention, the correspondent node 160 knows of which correspondent router (i.e. correspondent router 142) is capable of performing route optimization on its behalf. In this case, the correspondent node 160 itself informs the mobile node 120/125.

We will now describe each of these embodiments (and their variations) in detail. In the following description, for purpose of explanation, specific numbers, times, structures, and other parameters are set forth in order to provide thorough understanding of the present invention. However, it will be apparent to a person skilled in the art that' the present invention may be practiced without these specific details.

In one preferred embodiment, the correspondent routers 141 to 144 are cooperating with each other, and form a correspondent router ring, or CR-Ring, 104. The home agent 140 is also a member of the CR-Ring 104. Note that the home agent 140 can itself provide correspondent router functionality. In the CR-Ring 104, each member has a list of all the members in the CR-Ring 104. In addition, this list also indicates the network prefix of the correspondent network. This prefix is referred to as the correspondent prefix hereafter. Preferably, the list also contains information necessary to establish security associations with each member on the list, such as the public key of the member. Such a list may be manually distributed to each member of the CR-Ring 104 by an administrator. Alternatively, the list can be regularly updated by means of some content distribution protocols (such as those used to synchronize web contents on different web servers). In any case described in this specification, such a list is referred to as the CR-List.

A CR-Ring 104 may be formed manually by an Internet Service Provider (ISP) deploying these collaborating correspondent routers and home agents. Alternatively, groups of service providers may want to co-operate and form an alliance to provide correspondent routers services. A CR-Ring 104 may then be formed as well.

Fig. 2 shows the message sequence exchange leading to the route optimization of packets flowing between the mobile node 120/125 and the correspondent node 160. When the mobile node 120/125 has a data packet (data) 202 to send to the correspondent node 160, it finds that it currently does not have an optimized route to the correspondent node 160. Hence, the data packet 202 is tunneled to the home agent 140 in an outer packet (tunneled data) 201. In the outer packet 201, the mobile node 120/125 adds a mobility header option called the Correspondent Router Request (or CR-Req). This CR-Req indicates to the home agent 140 that the mobile node 120/125 wishes to start route optimization with a suitable correspondent router for the destination specified in the inner packet (data) 202 (i.e. correspondent node 160).

When the home agent 140 receives this packet 201, it then decapsulates the packet and forward the inner packet 202 to the correspondent node 160. Having processed the CR-Req embedded in the outer packet 201, the home agent 140 checks its CR-List to see which correspondent router among the list is handling the network where the correspondent node 160 resides in. This is indicated in Fig. 2 as the process 203. Once the home agent 140 has found the suitable correspondent router 142, it sends a Ring Binding Update (RBU) message 204 to the correspondent router 142. The RBU message 204 informs the correspondent router 142 of the current binding of home-address and the care-of-address of the mobile node 120/125. The RBU message 204 may be protected with security association established between the home agent 140 and the correspondent router 142. After verifying the RBU message 204, the correspondent router 142 accepts the binding by replying to the home agent 140 a Ring Binding Acknowledgement (RBA) message 205. From this point on, the correspondent router 142 is ready to accept the packets tunneled directly from the mobile node 120/125.

The home agent 140 also sends the mobile node 120/125 a Correspondent Router Response (CR-Res) message 206 to inform the mobile node 120/125 that the correspondent router 142 is located. The CR-Res message 206 carries a Correspondent Router Option (CR-Option) that contains information about the correspondent router 142. From this point on, the mobile node 120/125 can tunnel packets sent to the correspondent node 160 directly to correspondent router 142. In Fig. 2, this process is shown as the encapsulation of the data packet (data) 208 in the tunnel packet (tunneled data) 207. When the correspondent router 142 receives such a tunnel packet 207, it decapsulates the inner packet 208 and forwards it to the destination (correspondent node 160). Similarly, the correspondent router 142 also intercepts any packet sent to the mobile node 120/125 and tunneled it directly to the care-of-address of the mobile node 120/125. In Fig. 2, this process is shown as the encapsulation of the data packet (data) 209 sent from the correspondent node 160 into the tunnel packet (tunneled data) 210.

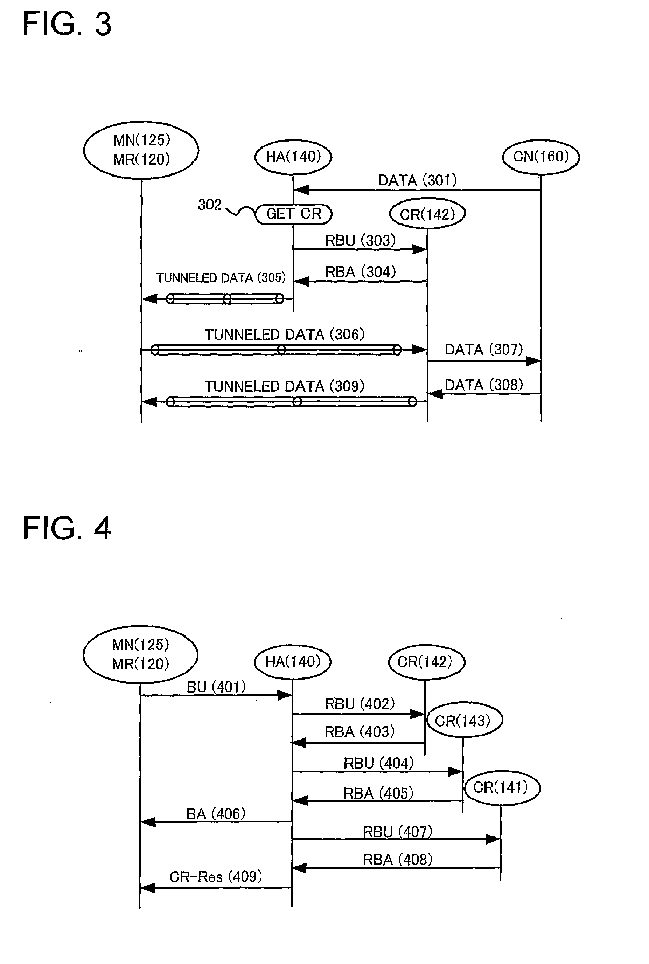

In the above description, the request for route optimization is initiated by the mobile node 120/125. Alternatively, the home agent 140 can take the initiative and suggest to the mobile node 120/125 a correspondent router to use without being first requested by the mobile node 120/125. This situation is illustrated in Fig. 3.

Route optimization method in Fig. 3 is implemented, for example, when no optimized route can be established by the normal route optimization between the mobile node 120/125 and the correspondent 160, or when the communication system is arranged so that the home agent 140 takes the initiative in establishing the optimized route. It may be occurred that the home agent 140 implements the home agent initiative route optimization as shown in Fig. 3 in case that, for example, the route optimization procedure is being implemented between the mobile node 120/125 and the correspondent node 160 and then the home agent 140 recognizes the HoT message sent from the correspondent node 160 to mobile node 120/125 as the data packet 301 mentioned later. Therefore, it is desirable that such rules have been pre-determined in the system so that the route optimization by the home agent 140 and the normal route optimization by mobile node 120/125 are not initiated simultaneously. Alternatively, it is preferable that priority control is implemented such that these route optimization procedures are performed in proper order, for example the route optimization is performed by the home agent 140 if the normal route optimization by the mobile node 120/125 has been failed.

In Fig. 3, the correspondent node 160 sends a data packet (data) 301 to the mobile node 120/125. As the data packet 301 is addressed to the home-address of the mobile node 120/125, the data packet 301 will be routed to the home network of the mobile node 120/125 and intercepted by the home agent 140. Upon intercepting this packet, the home agent 140 knows that route optimization was not used (otherwise, the packet would not be routed towards the home network). The home agent 140 then checks its CR-List to determine a correspondent router, say correspondent router 142, that is suitable for the node identified by the source of the data packet 301 (i.e. correspondent node 160), as represented in Fig. 3 by the process 302. The home agent 140 then sends a RBU message 303 to the correspondent router 142 to inform correspondent router 142 of the binding of the home-address and the care-of-address of the mobile node 120/125. When the home agent 140 is aware of the security parameters of the correspondent router 142, the RBU message 303 can be secured. After receiving the RBA message 304 as an acknowledgement to the RBU message 303, the home agent 140 then proceeds to tunnel the data packet 301 to the mobile node 120/125. In doing so, the home agent 140 also adds a CR-Res message to the mobility header of the tunnel packet (tunneled data) 305. The CR-Res message carries a CR-Option indicating to mobile node 120/125 that the correspondent router 142 should be used if route optimization is desired. From this point on, an optimized route between the mobile node 120/125 and the correspondent node 160 is effectively established, and the mobile node 120/125 can tunnel packets sent to the correspondent node 160 directly to the correspondent router 142. In Fig. 3, this process is shown as the encapsulation of the data packet (data) 307 in the tunnel packet (tunneled data) 306. When the correspondent router 142 receives such a tunnel packet 306, it decapsulates the inner packet 306 and forwards it to the destination (correspondent node 160). Similarly, the correspondent router 142 also intercepts any packet sent to the mobile node 120/125 and tunnels it directly to the care-of-address of the mobile node 120/125. In Fig. 3, this process is shown as the encapsulation of the data packet (data) 308 sent from the correspondent node 160 into the tunnel packet (tunneled data) 309.

When the mobile node 120/125 moves to a new point of attachment, it needs to inform its home agent (i.e. home agent 140) of its new care-of-address by sending a new BU message. In order to maintain its current route optimizations with other nodes, in all prior arts, the mobile node 120/125 needs to send to each of these nodes a BU message as well. If the mobile node 120/125 has route optimizations with a lot of nodes, this add extra surge of traffic for the mobile node 120/125. This can be undesirable, as the connection to the global network 100 the mobile node 120/125 has is usually wireless and thus bandwidth limited. The present invention resolves this problem by allowing the home agent 140 to send BU messages on behalf of the mobile node 120/125. The home agent 140 can take two different approaches when sending BU messages on behalf of the mobile node 120/125. Firstly, the home agent 140 can send individual messages to each correspondent router that the mobile node 120/125 is performing route optimization with. Secondly, the home agent 140 can broadcast a single binding message to the entire CR-Ring 104.

To begin with,'the first approach is described in detail. This is illustrated in the message sequence diagram shown in Fig. 4. After moving to a new point of attachment, the mobile node 120/125 sends to the home agent 140 a BU message 401 to inform its new care-of-address. In the BU message 401, the mobile node 120/125 also adds one or more Correspondent Router Relay (CR-Relay) options, each CR-Relay option specifies a correspondent router the mobile node 120/125 currently maintains route optimization with. In the CR-Relay option, the mobile node 120/125 can also indicate which of the specified correspondent routers should have priority. In the example used in Fig. 4, the mobile node 120/125 lists the correspondent routers 141, 142 and 143 in the cur-replay options. Among these, correspondent routers 142 and 143 are indicated to be of priority.

When the home agent 142 receives the BU message 401, it will start dissipating the new binding information to the correspondent routers specified in the CR-Relay options. This is done by first sending RBU messages 402 and 404 to the correspondent routers 142 and 143 respectively. RBU messages are first sent to these correspondent routers 142 and 143 since they are marked to have priority. Once the RBA messages 403 and 405 are received from the correspondent routers 142 and 143 respectively, the home agent 140 immediately sends to the mobile node 120/125 a BA message 406. This BA message 406 also contains two CR-Options containing information of the correspondent routers 142 and 143 respectively. This informs the mobile node 120/125 that the correspondent routers 142 and 143 have been notified of the new binding. The home agent 140 will also send a RBU message to the remaining correspondent routers specified in the CR-Relay option that are not marked to have priority. In the example of Fig. 4, only correspondent router 141 is not marked to have priority. Hence only one RBU message 407 is sent to the correspondent router 141. Once the RBA message 408 is received from correspondent router 141, the home agent 140 will send a CR-Res message 409 with a CR-Option to inform the mobile node 120/125 that the correspondent router 141 has received the binding.

There may be a more suitable correspondent router than a current correspondent router which establishes the optimized route with the mobile node 120/125 on behalf of the correspondent node 160 because of the roaming of the mobile node 120/125 or some other reasons. Finding the more suitable router is present as the above-mentioned, the home agent or the correspondent router can proceed to aid route optimization between the correspondent router and the mobile node 120/125. Also, the home agent or the correspondent router can retrieve the CR-list or inquiry the other correspondent routers participating in the CR-Ring to see if there are any other suitable correspondent routers.

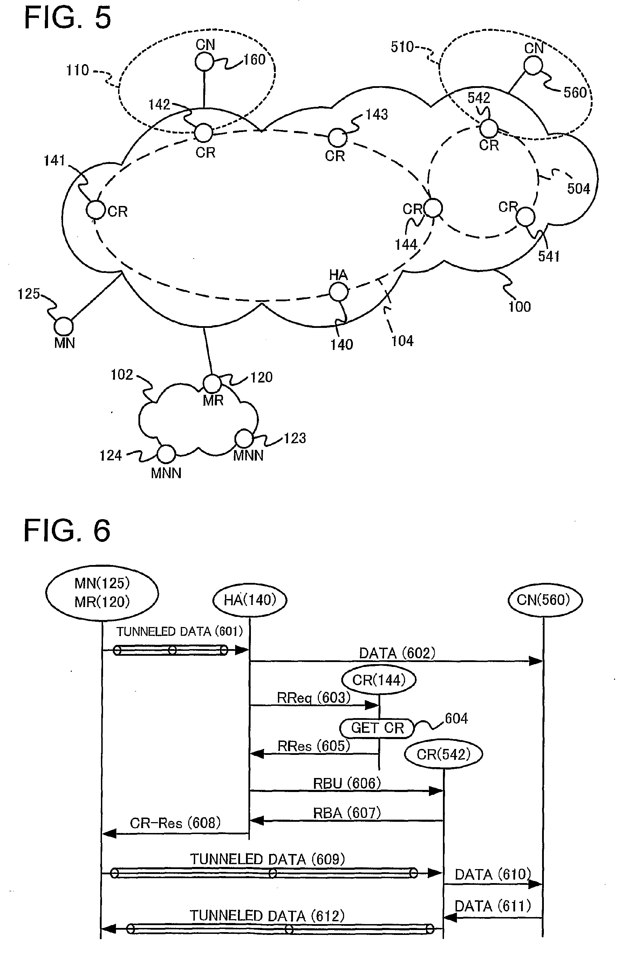

It is possible for a correspondent router to join multiple CR-Rings. This is illustrated in Fig. 5, where the correspondent router 144 joins both CR-Rings 104 and 504. On CR-Ring 504, there are other correspondent routers 541 and 542. The correspondent router 542 has a correspondent network 510, which includes the correspondent node 560. In such situations, when the home agent 140 is unable to locate a correspondent router that is suitable for a specified correspondent node (say correspondent node 560), it can then query all members in its CR-Ring (i.e. CR-Ring 104) to see if any member can find a suitable correspondent router in other CR-Rings. This procedure is illustrated in the message sequence diagram shown in Fig. 6.

In Fig. 6, the mobile node 120/125 is sending a packet (data) 602 to the the correspondent node 560. Since the mobile node 120/125 does not yet know of any correspondent router that handles the correspondent node 560, the mobile node 120/125 tunnels the packet (inner packet) 602 in the packet (outer packet or tunnel packet) 601 to its home agent 140. In the tunnel packet 601, the mobile node 120/125 adds a CR-Req message. When the home agent 140 receives the packet 601, it decapsulates the packet and forwards the inner packet 602 to correspondent node 560. Noticing the CR-Req message in the outer packet 601, the home agent 140 searches its CR-List for a suitable correspondent router, but is unable to locate one. The home agent 140 then sends a Ring Request (or RReq) message 603 to other members in its CR-Ring 104, requesting for a correspondent router that can handle the correspondent node 560. If no one replies after a certain timeout, the home agent 140 can assume that no correspondent router can be found. The RReq message should preferably be sent to all other members in the CR-Ring 104. Although this can be achieved by sending individual RReq message to each member in the CR-Ring 104, this is undesirable since it increases the amount of packets the home agent 140 injects into the network. A more preferable approach is for the members of a CR-Ring 104 to join a specific multicast group. This way, the home agent 140 can send a single RReq message 603 to the multicast address. Alternatively, the home agent 140 can also send the RReq message 603 to a single correspondent router (say, correspondent router 144). Selection of such a correspondent router may be manually configured when it is known beforehand that the correspondent router 144 is a member of multiple CR-Rings.

When the correspondent router 144 receives the RReq message 603, it searches its CR-Lists, as shown in the process 604, and finds a suitable correspondent router 542 in the CR-Ring 504. The correspondent router 144 then sends a Ring Response (or RRes) message 605 to the home agent 140. The RRes message 605 contains information about the correspondent router 542, including the correspondent prefix of the correspondent router 542, and security parameters necessary for the home agent 140 to set up a security association with the correspondent router 542. Note that because the correspondent router 144 has security parameters of the home agent 140 in its CR-List, it can protect the RRes message 605. After receiving this RRes message 605, the home agent 140 then proceeds to send a RBU message 606 to inform the correspondent router 542 of the binding of the home-address and the care-of-address of the mobile node 120/125. After receiving the RBA message 607 as an acknowledgement to RBU message 606, the home agent 140 then sends the mobile node 120/125 a CR-Res message 608. The CR-Res message 608 carries a CR-Option indicating to the mobile node 120/125 that the correspondent router 542 should be used if route optimization is desired. From this point on, an optimized route between the mobile node 120/125 and the correspondent node 560 is effectively established, and the mobile node 120/125 can tunnel packets sent to the correspondent node 560 directly to the correspondent router 542. In Fig. 6, this process is shown as the encapsulation of the data packet (data) 610 in the tunnel packet (tunneled data) 609. When the correspondent router 542 receives such a tunnel packet, it decapsulates the inner packet and forwards it to the destination. Similarly, the correspondent router 542 also intercepts any packet sent to the mobile node 120/125 and tunnels it directly to the care-of-address of in Fig. 6 mobile node 120/125. In Fig. 6, this process is shown as the encapsulation of the data packet 611 sent from the correspondent node 560 into the tunnel packet (tunneled data) 612.

In the above descriptions, we treat a mobile node and a mobile router to be the same for clarity sake. There are in fact some differences when a mobile router is involved. Firstly, the BU message sent by the mobile router (say, mobile router 120) to its home agent (say, home agent 140) will contain the mobile network prefix information. In this way, the home agent 140 can forward any packets sent to the mobile network 102 by encapsulating the packet to mobile router 120 at its current care-of-address. When the home agent 140 sends the RBU message to a correspondent router (say correspondent router 142), the RBU message can also contain the mobile network prefix information. In this way, the correspondent router 142 will be able to encapsulate any packet sent to the mobile network 102 to the mobile router 120. Secondly, by achieving route optimization with the correspondent router 142, it means that the mobile router 120 can forward to the correspondent router 142 any packets sent by mobile network nodes (e.g. mobile network nodes (MNN) 123 and 124) in its mobile network 102 to the correspondent node 160. It is not only restricted to packets originated from the mobile router 120 itself.

Similarly, since a correspondent router usually will be able to perform route optimization for any nodes within its correspondent network, the network prefix information of the correspondent network (i.e. the correspondent prefix) is a useful information to be sent to the mobile node (or the mobile router) in the CR-Option. In this way, the mobile node/router can make use of the optimized route between itself and the correspondent router for communications with other nodes from the same correspondent network.

In the above description, it is assumed that the home agent 140 sends individual RBU messages to each correspondent router listed in the CR-Option of the binding update message. It is also possible for the home agent 140 to broadcast the RBU message to a CR-Ring 104 so that it can update multiple correspondent routers at once. Each RBA message, however, should still be sent individually by each correspondent router. In this case, the preferable approach is for each member of a CR-Ring to join a specific multicast address group. The home agent 140 then sends the RBU message to this multicast address. In this way, all members in the CR-Ring will receive this RBU message. Preferably, a list of correspondent routers is inserted to the RBU message to indicate which correspondent routers should respond with a RBA message. This way, those correspondent routers listed in the RBU message will know of the binding between the home address and the care-of address of the mobile node 120/125, and will response with a RBA message.

It is also possible for the mobile node 120/125 to be a member of the CR-Ring 104. In this way, there is no longer a need for the home agent 140 to search for correspondent routers and send binding update messages on its behalf, except to save the bandwidth of the mobile node 120/125. Hence, if the mobile node 120/125 has a high enough bandwidth to the global network 100, and is also a member of CR-Ring 104, it is simpler for the mobile node 120/125 to search for correspondent routers on its own.

In this case, whenever the mobile node 120/125 wishes to perform route optimization with a correspondent node (say correspondent node 160), the mobile node 120/125 will first check its CR-List for a correspondent router. If a correspondent router (say correspondent router 142) is found, the mobile node 120/125 can proceed to set up route optimization with the correspondent router 142 by sending the correspondent router 142 binding update message. If no correspondent router is found, the mobile node 120/125 can then send RReq message to other members of the CR-Ring 104 and wait for a RRes message. Although no exemplary message exchanges sequence is illustrated here, it should be obvious to those skilled in the art how such a sequence will look like, based on the descriptions given in Figs. 2, 3 and 4.

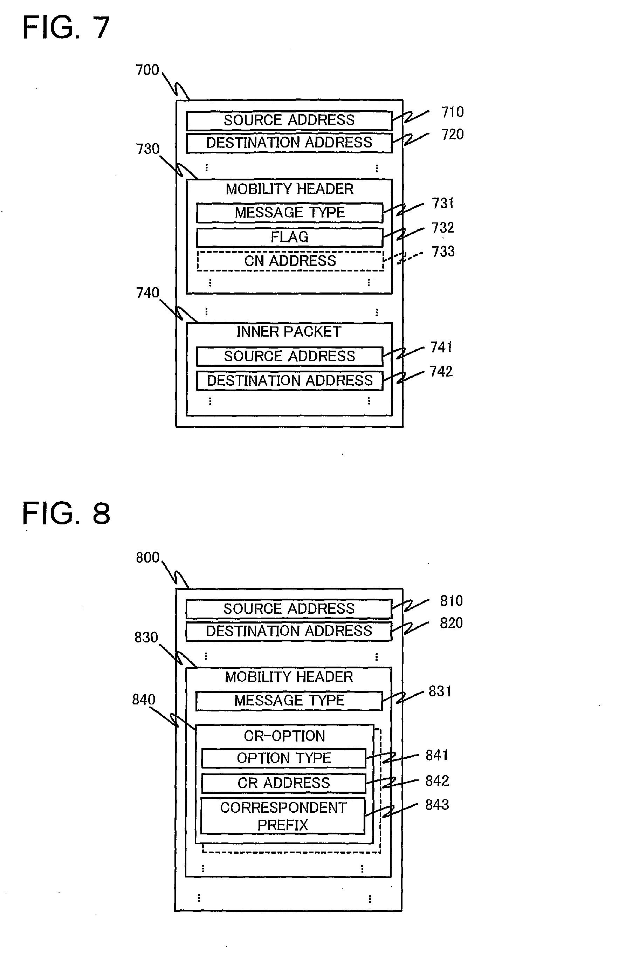

We will now go into details of the messages used in the preceding descriptions, and discuss what kind of information should be carried in each message. First is described the CR-Req message. This message allows the mobile node/router to request its home agent to look for a correspondent router. The message is embedded into the mobility header of a packet. It is preferably embedded into the tunnel packet encapsulating an actual data packet sent to the correspondent node, though it can as well be sent as a standalone packet to the home agent. Fig. 7 shows the packet structure when the CR-Req Message is embedded into a tunnel packet 700. The source address field 710 and the destination address field 720 should specify the care-of-address of mobile node/router and the address of home agent respectively. The CR-Req message appears in the mobility header 730. The message type field 731 identifies this mobility header as a CR-Req message. The flag field 732 indicates whether the correspondent node's address is stated explicitly. If the correspondent node address is stated explicitly, the optional CN address field 733 will appear, containing the address of the correspondent node. Else, the home agent should obtain the correspondent node's address from the destination field 742 of the inner packet 740. Obviously, the CN address field 733 must appear when the CR-Req message is sent as a standalone packet (and not embedded to a tunnel packet).

Fig. 8 shows the structure of a CR-Res message when it is sent as a standalone packet 800 instead of being embedded in a tunnel packet. The CR-Res message is sent by the home agent to inform the mobile node/router that it can use the correspondent router specified by the CR address field 842 for route optimization with any correspondent node falling into the network prefix specified by the correspondent prefix field 843. The source address field 810 and the destination address field 820 contain the address of the home agent and the care-of-address of the mobile node/router respectively. The CR-Res message appears in the mobility header 830. The message type field 831 identifies this mobility header as a CR-Res message. Each CR-Res message can contain one or more CR-Options 840. The option type field 841 identifies the option as a CR-Option. The CR address field 842 contains the address of the correspondent router, and the correspondent prefix field 843 contains the correspondent prefix handled by the correspondent router. Although not shown in Fig. 8, it is preferable that a correspondent prefix contains an IP address and prefix length.

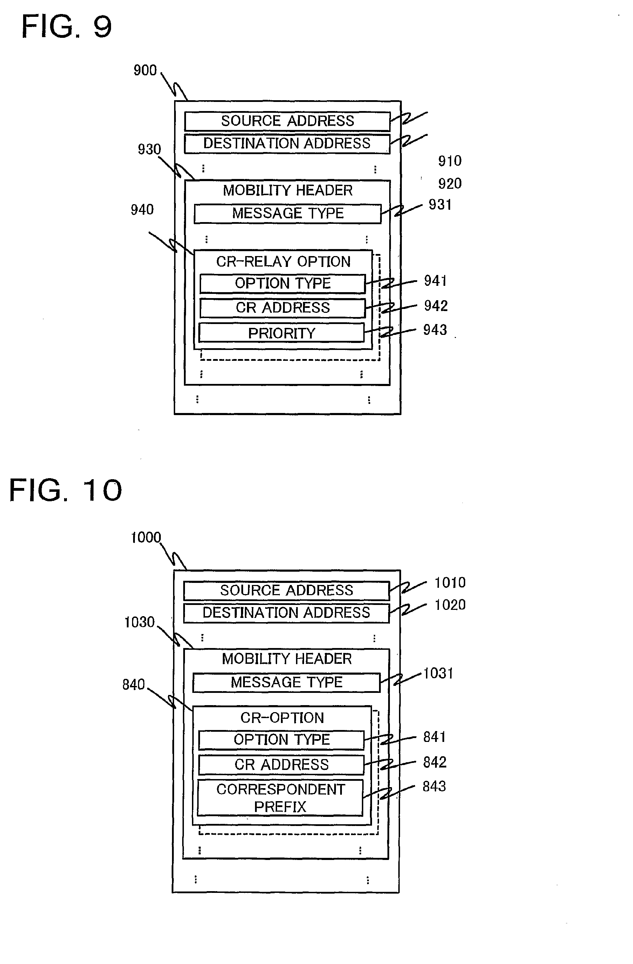

Fig. 9 shows the binding update message 900 sent by the mobile node/router to the home agent, with one or more CR-Relay options. Note that the binding update message 900 contains more fields that are omitted from Fig. 9 for simplicity. These omitted fields have contents as specified by the Mobile IPv6 or Network Mobility protocol. The source address field 910 and the destination address field 920 contain the care-of-address of the mobile node/router and the address of the home agent respectively. The binding update message 900 contains the mobility header 930, with the message type field 931 indicating this is a binding update message. To have the home agent send binding updates on behalf of the mobile node/router to correspondent routers, the mobile node/router will insert one or more CR-Relay options 940 into the mobility header 930. Each CR-Relay option 940 will contain an option type field 941 that identifies the option as a CR-Relay option, a CR address field 942 that contains the address of a correspondent router that the mobile node/router wish to maintain route optimization with, and a priority field 943 that specifies the priority of this correspondent router.

Fig. 10 shows the binding acknowledgement message 1000 sent by the home agent to the mobile node/router with one or more CR options to indicate successful sending of binding updates with the specified correspondent routers. Note that the binding acknowledgement message 1000 contains more fields that are omitted from Fig. 10 for simplicity. These omitted fields have contents as specified by the Mobile IPv6 or Network Mobility protocol. The source address field 1010 and the destination address field 1020 contain the address of the home agent and the care-of-address of the mobile node/router respectively. The binding acknowledgement message 1000 contains the mobility header 1030, with the message type field 1031 indicating this is a binding acknowledgement message. The home agent will insert one or more CR options 840 into the mobility header 1030 to relay the successful sending of binding updates to the specified correspondent routers. The CR option 840 has already been described previously and thus detail thereof omitted.

In normal deployment, a mobile node/router will have pre-established security associations with its home agent. Thus, although not shown in Figs. 8, 9 and 10, it is possible, and preferable, for the CR-Res options and CR-Relay options in the mobility headers of the various packets sent between the home agent and the mobile node/router to be security protected.

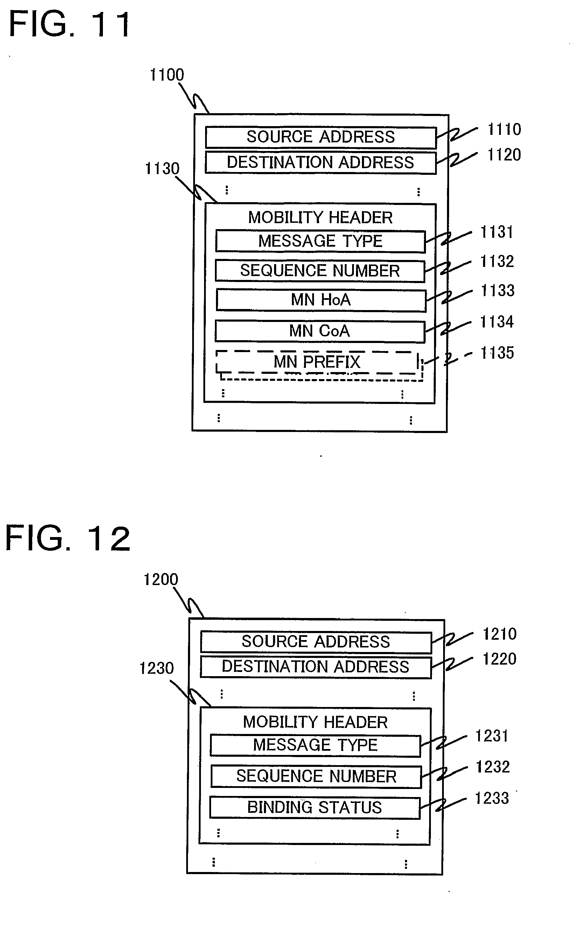

Fig. 11 shows the RBU message 1100 sent by a home agent on behalf of a mobile node/router to a correspondent router to inform the recipient of the binding of the home-address and the care-of-address of the mobile node/router. The source address field 1110 and the destination address field 1120 contain the address of the home agent and the correspondent router respectively. The RBU message appears as a mobility header 1130, with the message type field 1131 indicating this as a RBU message. The sequence number field 1132 contains a unique number to identify this RBU message. Preferably, the sequence number should be a monotonically increasing sequence to protect against replay attacks. The MN HoA field 1133 and the MN CoA field 1334 contain the home-address and the care-of-address of the mobile node/router respectively. In the case of a mobile router, the home agent may preferably add one or more optional MN prefix fields 1135 to inform the correspondent router of the mobile network prefixes of the mobile router.

Fig. 12 shows the RBA message 1200 sent by a correspondent router to a home agent in response to a RBU message. The source address field 1210 and the destination address field 1220 contain the address of the correspondent router and the home agent respectively. The RBA message appears as a mobility header 1230, with the message type field 1231 indicating this as a RBA message. The sequence number field 1232 contains the same sequence number 1132 as the previously received RBU message to indicate to which RBU message 1100 this RBA message 1200 response to. The binding status field 1233 indicates the result of the binding.

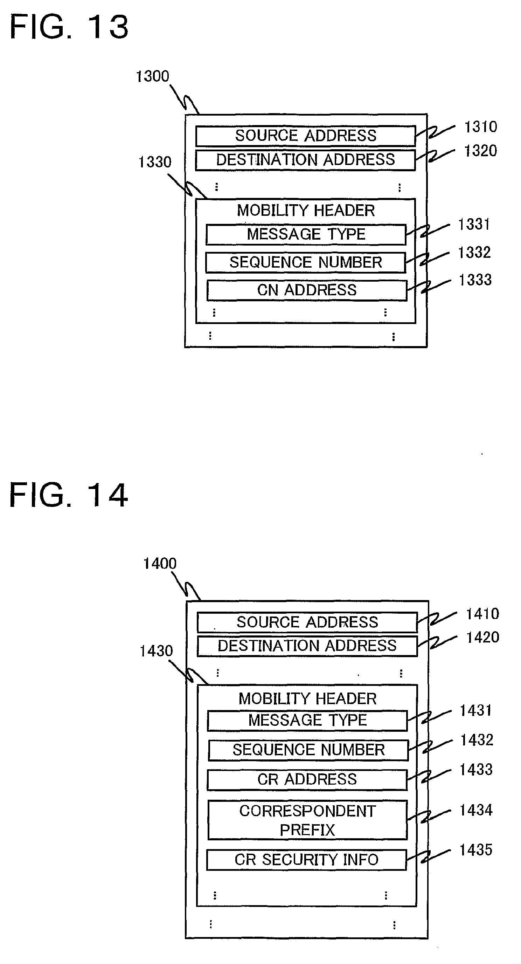

Fig. 13 shows the RReq message 1300 sent by a home agent to other members of a CR-Ring to enquire a suitable correspondent router for the specified correspondent node. The source address field 1310 contains the address of the home agent. If the RReq message 1300 is sent to a particular correspondent router, the destination address field 1320 contains the address of that correspondent router. If the RReq message 1300 is sent to a group of correspondent routers, the destination address field 1320 contains the multicast address representing the group of correspondent routers. The RReq message appears in the mobility header 1330 with the message type field 1331 indicating this message as a RReq message. The sequence number field 1332 contains a unique number to identify this RReq message. Preferably, the sequence number should be a monotonically increasing sequence to protect against replay attacks. The CN address field 1333 contains the address of the correspondent node for which a correspondent router is being queried.

Fig. 14 shows the RRes message 1400 sent by a correspondent router to a home agent in response to a RReq message 1300. This is sent when the correspondent router (i.e. sender of the RRes message 1400) located a suitable correspondent router for the specified correspondent node. To avoid confusion, we refer to the located correspondent router as the candidate router. The source address field 1410 and the destination address field 1420 contain the address of the correspondent router and the home agent respectively. The RRes message appears as a mobility header 1430, with the message type field 1431 indicating this as a RRes message. The sequence number field 1432 contains the same sequence number 1332 as the previously received RReq message to indicate to which RReq message 1300 this RRes message 1400 response to. The CR address field 1433 contains the address of the candidate router found to be suitable for the specified correspondent node, the correspondent prefix field 1434 contains the network prefix handled by the candidate router, and the CR security info field 1435 contains information necessary for the home agent to establish a security association with the candidate router.

Since members within the same CR-Ring will have enough information contained in their CR-Lists to establish security associations with each other, although not shown in Figs. 11, 12, and 14, the RBU message 1100, the RBA message 1200, and the RRes message 1400 may preferably be protected using the security parameters of the recipient (and possibly of the sender as well).

With all the messages defined and described, we can now proceed to explain the processing of these messages by a home agent or a correspondent router. Note that in the following explanation, we assume a home agent is also providing correspondent router functionality and vice versa. It should be apparent to any person skilled in the art on how to implement an entity that provides only the home agent or correspondent router functionality without the other.

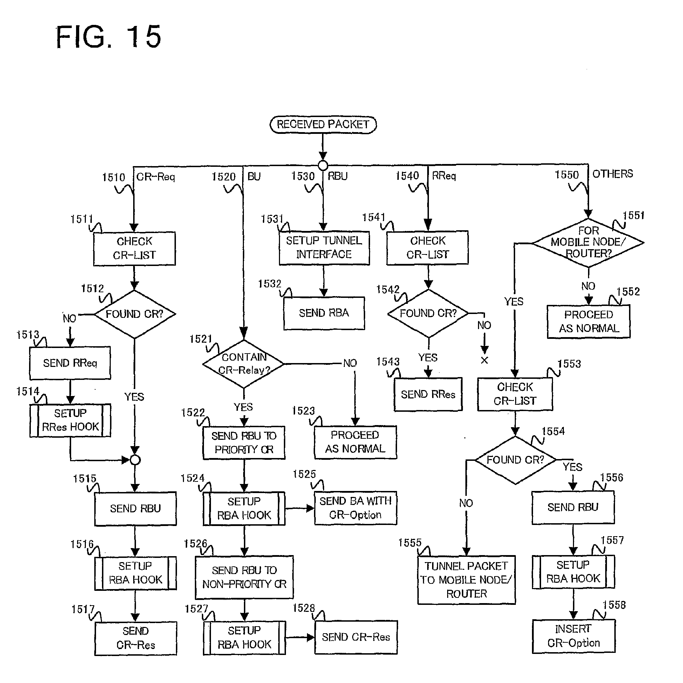

Fig. 15 shows the flow chart used by a home agent or a correspondent router when processing a received packet. In Fig. 15, various processes are described according to each sort of the received packets. In Fig. 15, if the received packet contains a CR-Req message, the path 1510 will be taken. The CR-List is first checked as shown in step 1511, to see if a correspondent router can be found for the correspondent node specified (step 1512). If so, the RBU message will be sent to the candidate router as shown in step 1515. Else, a RReq message can be sent to members of the CR-Ring to ask for a suitable candidate router as shown in step 1513. After sending the RReq message, a hook for RRes message is setup in step 1514. By setting up the hook, it implies that the current processing thread will wait for the receipt of a RRes message before proceeding, or abort in error upon timeout. When the RRes message is received, step 1515 is taken. In step 1515, a RBU message is sent to the candidate router. Following which, a RBA message hook is setup as shown in step 1516. Again, setting up a hook implies that the current processing thread will wait for the receipt of a RRes message before proceeding, or abort in error upon timeout. Once the RBA message is received, a CR-Res message is sent to the sender of the packet containing the CR-Req message (presumably a mobile node/router) in step 1517.

If the packet received is a binding update message, the path 1520 will be taken. First, the binding update message is checked if it contains one or more CR-Relay options in step 1521. If none is present, the binding update message is processed as normal, as shown in step 1523. Otherwise step 1522 is taken, where a RBU message is first sent to each correspondent router listed with priority in the binding update message.
After which, a hook is setup to wait for the receipt of a RBU message from each of the correspondent router listed with priority in step 1524 before sending the sender of the binding update message a binding acknowledgement with CR-options, as shown in the step 1525. At the same time as setting up the hook, step 1526 is also taken where a RBU message is first sent to each
correspondent router listed without priority in the binding update message. After which, a hook is setup to wait for the receipt of a RBU message from each of the correspondent router listed without priority in step 1527 before sending the sender of the binding update message a CR-Res message, as shown in the step 1528.

If the received packet is a RBU message, the path 1530 will be taken. First, tunnel interface is setup according to the RBU message and a route is added to use the tunnel interface in step 1531. After which, a RBA message is replied to the sender of the RBU message in step 1532. The tunnel interface is set up to encapsulate packets to the care-of-address of the mobile node/router as specified in the RBU message. The route added is so that any packets addressed to the home-address of the mobile node/router will be routed through the tunnel interface. For the case of a mobile router, if the mobile network prefix of the mobile router is also specified in the RBU message, the route will also be added such that any packets are sent to an address in the mobile network prefix, and then the packet will be routed through the tunnel interface.

If the received packet is a RReq message, the path 1540 will be taken. First, the CR-List will be checked as shown in step 1541, to see if any correspondent router can handle the correspondent node specified in the RReq message (step 1542). If one is found, a RRes message will be sent to sender of the RReq message, as shown in step 1543. If none can be found, no further action is necessary.

If the received packet is a normal data packet, path 1550 will be taken. First, in step 1551, the packet is checked if it is addressed to one of its mobile node/router that is not at home. If not, the packet is processed as normal in step 1552. If it is, this might suggest that the sender is not using an optimized router with the mobile node/router. It might then be preferable for the home agent to check its CR-List, as is shown step 1553, to look for a suitable correspondent router for the given correspondent node (i.e. sender of the packet) (step 1554). If none is found, the packet is tunneled to the mobile node/router as shown in step 1555. If a suitable correspondent router is found, the mobile node/router will then be informed of it. Before this, the correspondent router is made known of the bindings between the home-address and the care-of-address of the mobile node/router in step 1556 when a RBU message is sent to the correspondent router. A hook is setup to wait for the RBA message in step 1557. After this, a CR-Res message with CR-Option is inserted into the tunnel packet to be sent to the mobile node/router in the step 1558.

As can be fully appreciated by a person skilled in the art, the present invention allows the use of correspondent routers without adding further burden (with respect to both processing and bandwidth usage) on the mobile node/router, and is able to establish the authenticity of the
correspondent routers with relative ease. This is done with the concept of CR-Ring, where members pre-establish a security trust with each other.

However, the burden of processing and bandwidth usage is shifted to the home agents. This may sometimes not be desirable when a home agent is serving thousands of mobile nodes or mobile routers. Also, for certain kinds of deployment (such as a home agent deployed by a small company or even individual home users), it might be difficult or costly for the home agent to join a CR-Ring. In such cases, it might be desirable for the mobile node/router to seek its own correspondent routers. As mentioned previously, a main difficulty in doing so is the verification of the authenticity of the correspondent router.

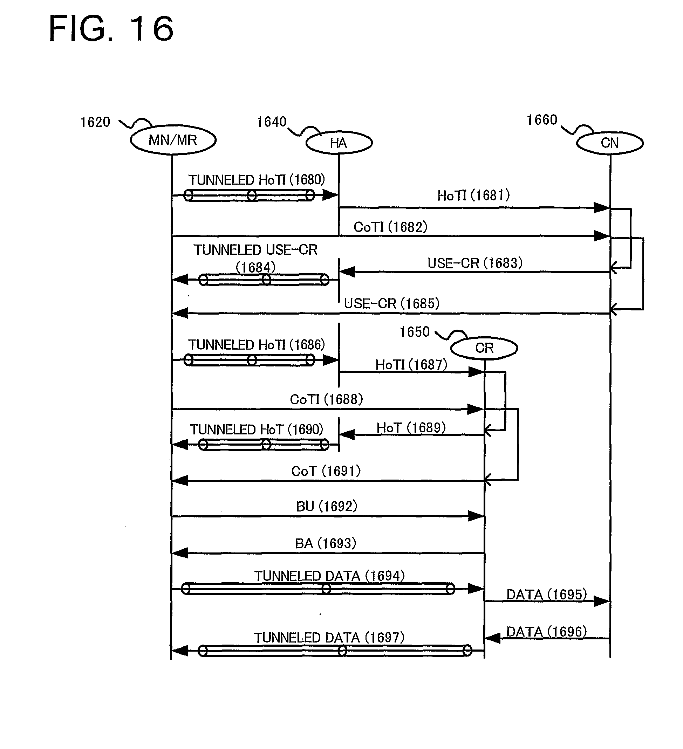

In the following, a method for mobile node/router to overcome this problem by enlisting the aid of the correspondent node is described with the present invention. Fig. 16 shows a message sequence to describe this method. In Fig. 16, the mobile node/router 1620 is either a mobile host or a mobile router, wishing to establish route optimization with a correspondent node 1660. Home agent 1640 is the home agent of the mobile node/router 1620, and the
correspondent router 1650 is the
correspondent router for the correspondent node 1660. When the mobile node/router 1620 wishes to establish an optimized route with the correspondent node 1660, it first has to perform the return routability procedure with the correspondent node 1660. This involves the mobile node/router 1620 sending a HoTI message 1681 and CoTI message 1682 to the correspondent node 1660. Since the HoTI message 1681 must be sent using the home-address as the source address, it is encapsulated in tunnel packet 1680 to be forwarded by home agent 1640 (tunneling the HoTI massage 1681).

Correspondent node 1660 is preconfigured to know that in its network, there is a correspondent router 1650 that can perform route optimization on its behalf. Such information may be manually configured by an administrator, or dynamically disseminated to the correspondent node 1660 by means such as Dynamic Host Configuration Protocol (DHCP). It can even be inserted into route advertisement messages that are regularly broadcasted by the default gateway of the correspondent node 1660. In fact, it is possible that the default gateway of correspondent node 1660 is the correspondent router 1650 itself. In any case, instead of responding with HoT and CoT messages as required by the return routability procedure, the correspondent node 1660 will respond to each of the HoTI message 1681 and CoTI message 1682 with a new message called USE-CR message. The USE-CR message 1683 is in response to the HoTI message 1681, hence it is sent to the home-address of the mobile node/router 1620. This USE-CR message 1683 is intercepted by the home agent 1640, which tunneled the packet to the care-of-address of mobile node/router 1620 with an encapsulated packet 1684 (tunneling the USE-CR message 1683). The USE-CR message 1685 is in response to the CoTI message 1682, and is thus replied directly to the care-of-address of the mobile node/router 1620.

Preferably, both USE-CR messages 1683 and 1685 contain the same information. The main objective behind the sending of USE-CR message is to re-direct the mobile node/router 1620 to attempt to perform router optimization with a correspondent router. The address of the correspondent router is given in the USE-CR messages 1683 and 1685. For the purpose of this example, the correspondent router indicated in the USE-CR messages 1683 and 1685 is the correspondent router 1650.

When the mobile node/router 1620 receives a USE-CR message 1683 and 1685, it knows that it should instead try to route optimize with the correspondent router 1650. Thus it starts the return routability procedure with the correspondent router 1650, as indicated by the sending of HoTI messages 1686 and 1687, and the CoTI message 1688. After receiving the response from the correspondent router 1650 (i.e. HoT messages 1689, 1690 and CoT message 1691), the mobile node/router 1620 can then send a binding update message 1692 to the correspondent router 1650. After the receipt of the binding acknowledgement message 1693 from the correspondent router 1650, an optimized route between the mobile node/router 1620 and the correspondent node 1660 is established via the correspondent router 1650. This is shown in Fig. 16 by the mobile node/router 1620 encapsulating the data packet 1695 in the tunnel packet 1694 (tunneling the data packet), and the correspondent router 1650 intercepting the data packet 1696 sent to the mobile node/router 1620 and encapsulating it in the tunnel packet 1697 (tunneling the data packet) .

In Fig. 16, we show the correspondent node 1660 responding to both the HoTI message 1681 and the CoTI messages 1682 with a USE-CR message 16.85. A person skilled in the art would obviously recognize that it is possible for a correspondent node to respond to only one of the HoTI message 1681 or the CoTI message 1682 with the USE-CR message 1685 to achieve the same effect.

For instance, since the CoTI and CoT messages need not go through the home agent of the mobile node, the correspondent node 1660 may choose to only respond to the CoTI message 1682 with a USE-CR message 1685. In this case, it is expected that USE-CR message 1685 can reach the mobile node faster than if responding to the HoTI message 1681 because the USE-CR message 1685 does not go through HA 1640.

In the above descriptions, we treat a mobile node and a mobile router to be the same for clarity sake. When the mobile node/router 1620 is indeed a mobile router, it can send the correspondent router 1650 information about its mobile network prefix in the binding update message 1692. In this way, the correspondent router 1650 will be able to encapsulate any packet sent to the given mobile network prefix and forward the encapsulated packet to the mobile router 1620. In addition, by achieving route optimization with the correspondent router 1650, it means that the mobile router 1620 can forward to the correspondent router 1650 any packets sent by mobile network nodes in its mobile network to the correspondent node 1660. It is not only restricted to packets originated from the mobile router 1620 itself.

Similarly, since a correspondent router usually will be able to perform route optimization for any nodes within the correspondent network, the network prefix information of the correspondent network (i.e. the correspondent prefix) is a useful information to be sent to the mobile node (or the mobile router). In this way, the mobile node/router can make use of the optimized route between itself and the correspondent router for communications with other nodes from the same correspondent network. This information can be placed in the USE-CR messages 1683 and 1685 if the correspondent prefix of correspondent router 1650 is also made known to the correspondent node 1660. The information can also be carried in CR-Option inserted into the BA message 1693, or even repeated in the CoT message 1688 and HoT message 1689.

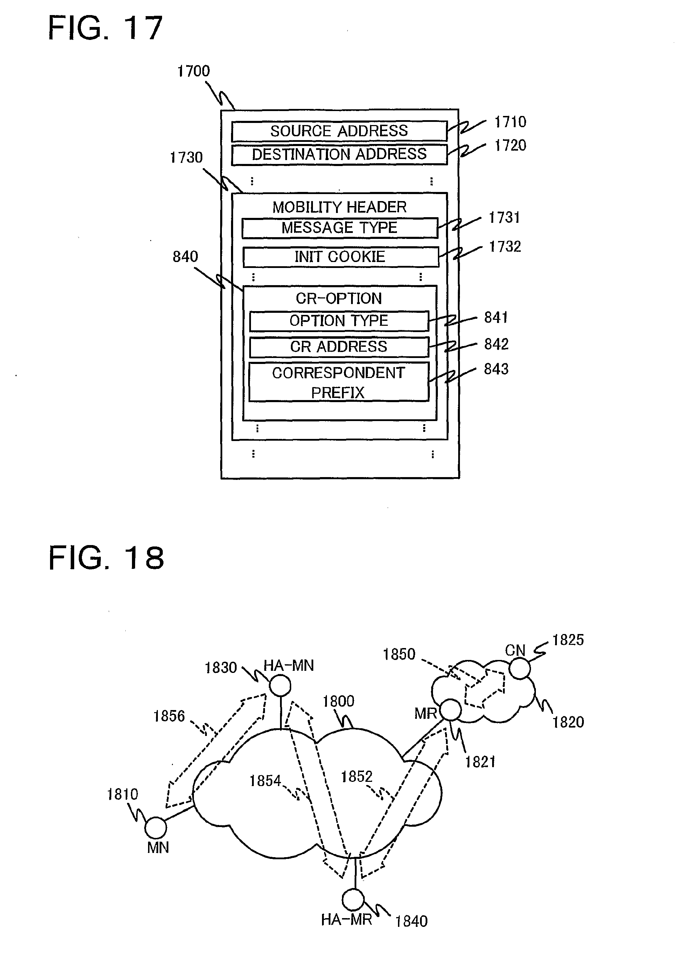

Fig. 17 shows the packet structure of the new message defined by the present invention, the USE-CR message 1700. It is used by a correspondent node in response to a CoTI or HoTI message from a mobile node/router to inform the mobile node/router to instead try performing route optimization with a correspondent router. The source address field 1710 contains the address of the correspondent node. When the USE-CR message 1700 is sent in response to a HoTI message, the destination field 1720 of the USE-CR message 1700 contains the home-address of the the mobile node/router. When the USE-CR message 1700 is sent in response to a CoTI message, the destination field 1720 of the USE-CR message 1700 contains the care-of-address of the mobile node/router. The USE-CR message appears in the mobility header 1730, with the message type field 1731 identifies this mobility header as a USE-CR message. The init cookie field 1732 contains the home init cookie or the care-of init cookie that is specified in the HoTI or CoTI message. A CR-Option 840 is inserted to the USE-CR message 1700 to inform the receiver of the address of the correspondent router. The format and fields of CR-Option 840 is already explained elsewhere in this specification, and thus detail thereof is omitted. A point to note is that if the sender (i.e. correspondent node) is not aware of the correspondent prefix, it can either fill in a special (eg. all-zero or all-one) value into correspondent prefix field 843 to indicate that it does not know the correspondent prefix, or it can simply fill in the network prefix of the link it is currently on.

The use of this USE-CR option allows a correspondent node to re-direct a mobile node/router to perform route optimization with a correspondent router. This allows the correspondent node to enjoy the benefits of route optimization without having to implement the full functionality of route optimization. In addition, because the correspondent router information is passed to the correspondent node independently (via DHCP or other means), the correspondent router selected will be the most suitable correspondent router. Furthermore, by replying the HoTI and CoTI messages with USE-CR messages, the mobile node/router will receive two USE-CR messages each containing the same correspondent router information. This reduces the possibility of the correspondent router information being altered by a malicious node en-route. In addition, by copying the init cookies from CoTI and HoTI messages into the USE-CR messages, the mobile node/router has one more way of verifying the authenticity of the received USE-CR messages.

The main advantage of using the USE-CR message is when the correspondent node itself is mobile, or behind a mobile router. To understand why this case has a great advantage, one has to consider the scenario illustrated in Figs. 18, 19 and 20. In these Figs. 18, 19 and 20, the correspondent node 1825 is in a mobile network 1820 behind a mobile router 1821. It is communicating with another mobile node/router 1810 across the global network (e.g. Internet) 1800. The home agent (HA-MN) 1830 is the home agent for the mobile node/router 1810, and the home agent (HA-MR) 1840 is the home agent for the mobile router 1821.

When no route optimization is attempted, communications between the mobile node/router 1810 and the correspondent node 1825 will follow the paths 1850, 1852, 1854 and 1856 as shown in Fig. 18. The path 1852 is the tunneling between the mobile router 1821 and its home agent 1840. The path 1856 is the tunneling between the mobile node/router 1810 and its home agent 1830.

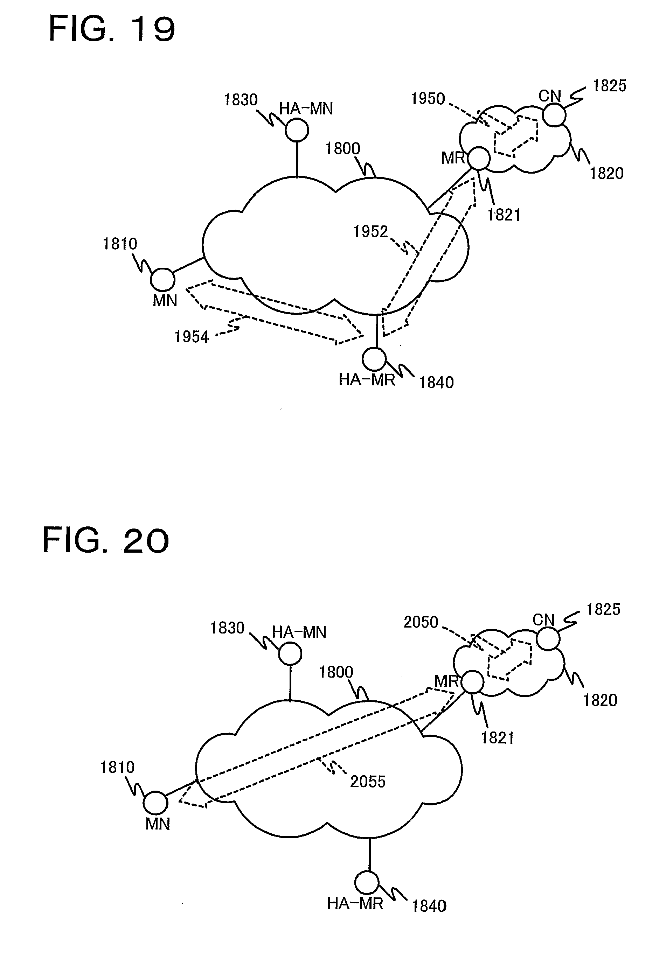

Now, suppose that the mobile node/router 1810 initiates route optimization with the correspondent node 1825. If the correspondent node 1825 does not use the USE-CR message, the route between the mobile node/router 1810 and the correspondent node 1825 will still be sub-optimal, even though the correspondent node 1825 implements the full route optimization functionalities. This situation is shown in Fig. 19, where communications between the mobile node/router 1810 and the correspondent node 1825 will follow the paths 1950, 1952, and 1954. This is because even though Mobile IPv6 route optimization is used, it only allows the mobile node/router 1810 to skip its home agent 1830. Tunneling still occurs between the mobile router 1821 and its home agent 1840, indicated by the path 1952.

By using the USE-CR message, the correspondent node 1825 can redirect mobile node/router 1810 to establish an optimized route with the mobile router 1821 instead. Then the communications path will be truly optimized, as shown as the paths 2050 and 2052 in Fig. 20. In this case, the correspondent node 1825 can place the current care-of-address of the mobile router 1821 in the USE-CR messages, so that the mobile node/router 1810 attempts to set up an optimized tunnel with the mobile router 1821 directly. Whenever the mobile router 1821 moves (and changes its care-of-address), the mobile node/router 1810 can be notified via a new USE-CR message sent by the correspondent node 1825. Alternatively, the correspondent node 1825 can use the home-address of the mobile router 1821 in the USE-CR message. After the mobile node/router 1810 sets up a tunnel with the home-address of the mobile router 1821, the tunnel can then be optimized to use the care-of-address of the mobile router 1821. This is done by having the mobile router 1821 send binding updates to the mobile node/router 1810.

The above-mentioned operation requires that the corr,espondent node responds to the CoTI or HoTI message with the USE-CR message. If the correspondent node does not implement such functionality, there is still a way for the correspondent router to make itself known.

This is for the correspondent router to inspect every packet destined to the correspondent node(s), and hunt for a CoTI or HoTI message. When a HoTI or CoTI message is detected, the correspondent router can then respond with a USE-CR message on behalf of the correspondent node, specifying itself as the correspondent router.

This is especially useful for mobile ' networks, when the correspondent node is itself a mobile network node and the correspondent router is a mobile router. This allows the correspondent router to redirect a remote mobile node's route optimization request to itself.

Using the example illustrated in Figs. 18, 19 and 20, the above-mentioned method is described. In Figs 18, 19 and 20, CN 1825 is the correspondent node residing in the mobile network 1820 of the mobile router 1821. If CN 1825 does not use the USE-CR message, MR 1821 can inspect all packets sent to the mobile network 1820. Suppose a HoTI or CoTI message sent from MN 1810 to CN 1825 is detected, the mobile router MR 1821, acting as the correspondent router of CN 1825, can send a USE-CR message on behalf of the CN 1825 to MN 1810.

In the USE-CR message, the CR Address field (CR Address field 842 in 17) can be specified as the home address or the care-of address of the MR 1821. If the care-of address is used, then each time MR 1821 changes its care-of address, it needs to transmit a USE-CR message again. If the home address is used, then it is likely that MR 1821 will initiate another route optimization with MN 1810 in order for the routing path to follow the optimized route as shown in Fig. 20 (route 2055 in Fig. 20).

Because the operation of inspecting all packets that are destined to nodes (correspondent nodes) behind the correspondent router and pass through the correspondent router for HoTI/CoTI message is quite a demanding task, it is possible to have a separate entity that does the inspection, and notify the correspondent router when a HoTI or CoTI message is detected. This entity can be another router that is located near the correspondent router, or the upstream router of the correspondent router itself. It can even be a dedicated node for packet inspection purposes.

A lot of enterprise networks include such security inspection machines that silently inspect packets for malicious contents. They can implement additional functionality to detect packets for CoTI/HoTI message, and alert the correspondent router when one is detected. When the packets to be inspected would normally not flow through the inspection node (e.g. the above-mentioned security inspection machine), one preferable approach is for the correspondent router to duplicate a copy of the packet and forward the duplicate to the inspection node for HoTI/CoTI message detection, while the original packet is routed normally.

The use of another entity to detect the CoTI/HoTI message is especially useful when the correspondent router is itself a mobile router. This is because mobile devices usually have limited resources. Thus, it will be desirable to off-load such intensive operations to some other nodes. One preferable approach is for such inspection node to be located near the home agent of the mobile router which acts as a correspondent router. In this case, it is the responsibility of the home agent of the mobile router which acts as a correspondent router to duplicate a copy of the packet to the inspection node, before forwarding the packet through the bi-directional tunnel to the mobile router which acts as a correspondent router. A person skilled in the art would appreciate that it is even possible for the inspection node to be the home agent itself.

In the above-mentioned description, the correspondent router inspects all packets that are destined to nodes (correspondent nodes) behind the correspondent router for HoTI/CoTI message. Alternatively, the correspondent router can inspect ICMP notification packet to notify that HoTI/CoTI message could not be understood. In this case, the correspondent router inspects all packets from nodes in its managed networks for ICMP notification packet which notifies that HoTI/CoTI message could not be understood. In this way, the correspondent router can identify the address of the node which tries to perform route optimization from the address field of the found ICMP notification packet, and respond with USE-CR message to indicate that it is a correspondent router.

This process seems to need the same or more burden of processing as the above-mentioned process (because the content of ICMP notification message must be identified). However, it may be possible to lessen the net burden of the processing on the correspondent router when the number of packets incoming from the outside of the managed networks is smaller than the number of packets outgoing from the inside of the managed networks concerning packets traversing the correspondent router. Furthermore, the correspondent router can determine dynamically whether it proceeds to inspect packets incoming from the outside of the managed networks (i.e. to inspect HoTI/CoTI massage), or to inspect packets outgoing from the inside of the managed networks (i.e. to inspect ICMP notification packet which notifies that HoTI/CoTI message could be understood). It is possible that a certain packet inspection node which is different from the correspondent router also inspects ICMP notification packet, and the result of inspection is informed from the packet inspection node to the correspondent router.

Having described the various methods of how the present invention works, we now turn our attention to an exemplary architecture of the apparatus described herein.

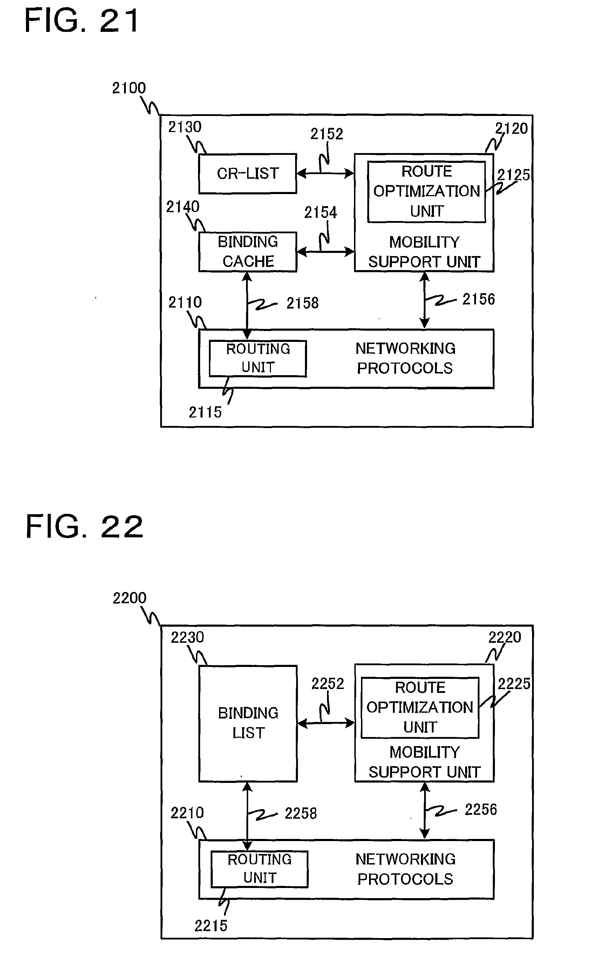

Fig. 21 shows a preferred functional architecture 2100 of a correspondent router or a home agent in a CR-Ring. It comprises a set of networking protocols represented by the functional block 2110. This functional block 2110 includes all protocols, software and hardware necessary for provisioning networking capabilities to the home agent or the correspondent router. Within network protocols 2110, a routing unit 2115 is present. It handles the decision of forwarding packets to other nodes. The functional architecture 2100 also comprises the mobility support unit 2120. This includes all software necessary to support mobile protocols such as Mobile IP or NEMO Basic Support. These mobility protocols require the home agent or the correspondent router to maintain a binding cache 2140 to store the bindings between the care-of-addresses and the home-addresses of a mobile node or router. For the current invention, the home agent or the correspondent router requires an additional module in the mobility support unit 2120 in order to provide capabilities described in this invention. This additional module is the route optimization unit 2125. The route optimization unit 2125 maintains the information of other members in the CR-Ring in the CR-List 2130. The data paths 2152, 2154, 2156 and 2158 show possible interactions between these functional blocks.

All mobility related messages are passed from the networking protocols 2110 to the mobility support unit 2120 for further processing. This is done via the data path 2156. The route optimization unit 2125 will handle all messages and options defined in this invention, such as the CR-Req option, RReq, RRes, RBU and RBA messages. The route optimization unit 2125 will need to consult the CR-List 2130 for relevant information via the data path 2152. Similarly, when the mobility support unit 2120 receives BU messages from mobile nodes or mobile routers, or when the route optimization unit 2125 accepts RBU messages, they will need to update the binding cache 2140 via the data path 2154. When a binding update is successful, it is necessary for the home agent or the correspondent router to forward packets addressed to the home-address of a mobile node/router to its care-of-address. The routing unit 2115 can make such decision by consulting the binding cache 2140 via the data path 2158.

Fig. 22 shows a preferred functional architecture 2200 of a mobile node/router as described in this invention. It comprises a set of networking protocols represented by the functional block 2210. This functional block 2210 includes all protocols, software and hardware necessary for provisioning networking capabilities to the mobile node/router. Within network protocols 2210, a routing unit 2215 is present. It handles the decision of forwarding packets to other nodes. The functional architecture 2200 also comprises the mobility support unit 2220. This includes all software necessary to support mobile protocols such as Mobile IP for a mobile node or NEMO Basic Support for a mobile router. These mobility protocols require the mobile node/router to maintain a binding list 2230 to store the information on all other nodes that should be informed of the bindings between the care-of-address and home-address of the mobile node/router. For the current invention, the mobile node/router requires an additional module in the mobility support unit 2220 in order to provide capabilities described in this invention. This is the route optimization unit 2225. The route optimization unit 2225 maintains the information stored in the binding list 2230. The data paths 2252, 2256 and 2258 show possible interactions between these functional blocks.

All mobility related messages are passed from the networking protocols 2210 to the mobility support unit 2220 for further processing. This is done via the data path 2256. The route optimization unit 2225 will handle all messages and options defined in this invention, such as the CR-Res or USE-CR option. The route optimization unit 2225 will need to consult and update the binding list 2230 to maintain relevant information of correspondent routers via the data path 2252. Similarly, when the mobile node/router needs to forward packets to a particular correspondent node, the routing unit 2215 will have to consult the binding list 2230 via the data path 2258 to check if route optimization should be used when forwarding this packet.

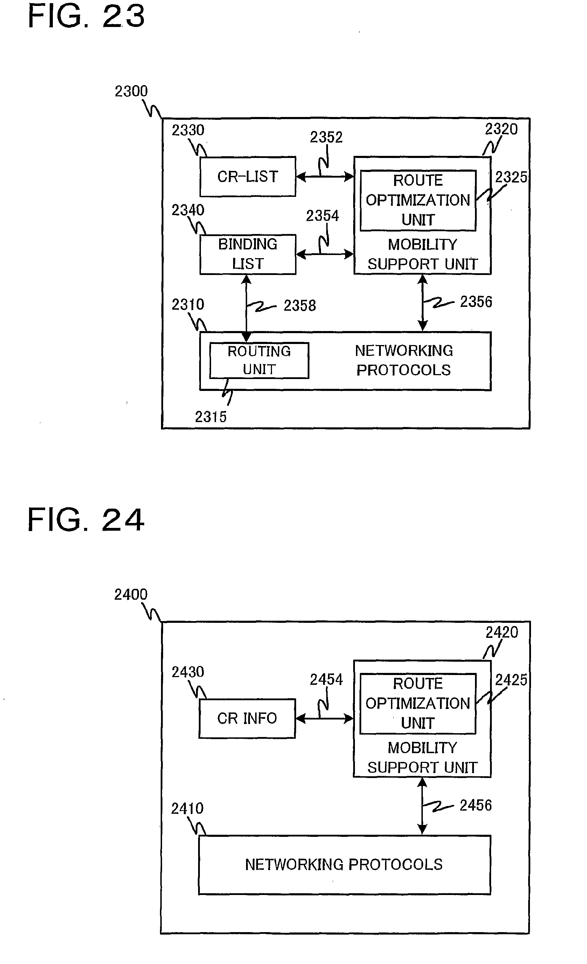

As mentioned earlier, it is possible for a mobile node/router to be a member of a CR-Ring. In this case, the functional architecture 2200 of Fig. 22 will have to be modified. Fig. 23 shows a preferred functional architecture 2300 of such a mobile router/node that is a member of a CR-Ring. It comprises a set of networking protocols represented by the functional block 2310. This functional block 2310 is identical to the networking protocol 2210 and hence description thereof is omitted. Within network protocols 2310, a routing unit 2315 is present. It handles the decision of forwarding packets to other nodes. The functional architecture 2300 also comprises the mobility support unit 2320. This includes all software necessary to support mobile protocols such as Mobile IP for a mobile node or NEMO Basic Support for a mobile router. These mobility protocols require the mobile node/router to maintain a binding list 2340 to store the information all other nodes that should be informed of the bindings between the care-of-address and the home-address of the mobile node/router. For the current invention, the mobile node/router requires an additional module in the mobility support unit 2320 in order to provide capabilities described in this invention. This is the route optimization unit 2325. The route optimization unit 2325 maintains the information stored in the binding list 2340. Being a member of a CR-Ring, the route optimization unit 2325 also maintains the information of other members in the CR-Ring in the CR-List 2330. The data paths 2352, 2354, 2356 and 2358 show possible interactions between these functional blocks.

All mobility related messages are passed from the networking protocols 2310 to the mobility support unit 2320 for further processing. This is done via the data path 2356. The route optimization unit 2325 will handle all messages and options defined in this invention, such as the CR-Req and USE-CR options, RReq, RRes, RBU and RBA messages. The route optimization unit 2325 will need to consult the CR-List 2330 for information on a correspondent router for given correspondent node via the data path 2352. Similarly, when route optimization is successfully set up with a correspondent router, the route optimization unit 2325 will need to update the binding list 2340 via the data path 2354. The route optimization unit 2325 will need to consult and update the binding list 2340 to maintain relevant information of correspondent routers via the data path 2354. Similarly, when the mobile node/router needs to forward packets to a particular correspondent node, the routing unit 2315 will have to consult the binding list 2340 via data path 2358 to check if route optimization should be used when forwarding this packet.

Fig. 24 shows a preferred functional architecture 2400 of a correspondent node capable for sending the USE-CR message as described in this invention. It comprises a set of networking protocols represented by the functional block 2410. This functional block includes all protocols, software and hardware necessary for provisioning networking capabilities to the mobile node/router. The functional architecture 2400 also comprises the mobility support unit 2420. In the current invention, it is not necessary for the mobility support unit 2420 to include all software necessary to support mobile protocols such as Mobile IP. The current invention only requires the mobility support unit 2420 to respond to HoTI and CoTI messages with a USE-CR message. The information on the correspondent router to use is stored in the CR info 2430. The data paths 2454 and 2456 show possible interactions between these functional blocks.

All mobility related messages are passed from the networking protocols 2410 to the mobility support unit 2420 for further processing. This is done via the data path 2456. The route optimization unit 2425 will respond to HoTI and CoTI messages with a USE-CR message containing information on a correspondent router that can perform route optimization on behalf of the correspondent node. This information can be obtained from the CR info 2430 via the data path 2454. Although the functional architectures 2100, 2200, 2300 and 2400 show the necessary components necessary to implement the various apparatus defined in the present invention, it should be apparent to a person skilled in the art that it is possible for there to be more components. For instance, the functional architecture 2400 of a correspondent node does not show components necessary for a correspondent node to perform route optimization itself. It should however be obvious that a correspondent node may implement the full the route optimization functionality, while at the same time being able to use the USE-CR message so that it can take advantage of a correspondent router performing route optimization on its behalf if necessary. Similarly, the mobile node/router, the correspondent router or the home agent can also comprise components to implement the route optimization functionality of the prior art, and use the route optimization methods of the prior art and the present invention appropriately. Furthermore, the order to perform the prior art's route optimization method and the present invention's route optimization method may be determined and properly controlled on the basis of certain conditions.

Although the invention has been herein shown and described in what is conceived to be the most practical and preferred embodiment, it will be appreciated by those skilled in the art that various modifications may be made in details of design and parameters without departing from the scope and ambit of the invention.

### INDUSTRIAL APPLICABILITY

According to the present invention, a suitable correspondent router or suitable route can be found, for example, when route will be optimized between a mobile node or a mobile router and a correspondent node by using a correspondent router. Especially, the present invention allows route optimization to be performed between a mobile node or a mobile route and a correspondent node whether the correspondent node would support Mobile IPv6 or not. Therefore, the present invention can be applied to the field of the communication technology using the Internet Protocol, in particular to the route optimization technology provided in Mobile IPv6.

## Claims

1. A communication system comprising a communication node (CN, 1660), a correspondent node (MN/MR, 1620) which has a function of route optimization and communicates with the communication node (CN, 1660), and a correspondent router (CR, 1650) which is managing a correspondent network the communication node (CN, 1660) is part of,
wherein the correspondent node (MN/MR, 1620) sends a predetermined message to the communication node (CN, 1660) in a process of establishing route optimization,
**characterized in that**
the communication node (CN, 1660) sends a response message including information on the correspondent router (CR, 1650) in response to the received predetermined message.

2. The communication system according to claim 1,
wherein the predetermined message sent in the process of establishing route optimization is a Care-of Test Init message or a Home Test Init message.

3. The communication system according to claim 2, further comprising a home agent (HA, 1640) of the correspondent node (MN/MR, 1620),
wherein, when receiving an encapsulated Home Test Init message sent from the correspondent node (MN/MR, 1620), the home agent sends the Home Test Init message to the communication node (CN, 1660) after decapsulating the encapsulated Home Test Init message, and
wherein when receiving the response message sent from the communication node (CN, 1660) in response to the Home Test Init message, the home agent (HA, 1640) encapsulates and sends the response message to the correspondent node (MN/MR, 1620).

4. The communication system according to any one of claims 1 to 3,
wherein the response message includes a source address, a destination address and a mobility header, and
wherein the mobility header includes information indicating this message is the response message and the information on the correspondent router (CR, 1650).

5. A communication node (CN, 1660) which communicates with a correspondent node (MN/MR, 1620) having a function of route optimization, and which is a part of a correspondent network managed by a correspondent router (CR, 1650),
the communication node (CN, 1660) comprising a receiving unit configured to receive a predetermined message from the correspondent node (MN/MR, 1620) in a process of establishing route optimization between the communication node (CN, 1660) and the correspondent node (MN/MR, 1620),
**characterized in** further comprising a sending unit configured to send a response message including information on the correspondent router (CR, 1650) in response to the received predetermined message.

6. The communication node (CN, 1660) according to claim 5,
wherein the predetermined message sent in the process of establishing route optimization is a Care-of Test Init message or a Home Test Init message,
the communication node (CN, 1660) further comprising a choosing unit configured to choose the Care-of Test Init message or the Home Test Init message as a message to be responded, and
wherein the sending unit sends the response message in response to the Care-of Test message or the Home Test Init message chosen by the choosing unit.

7. The communication node (CN, 1660) according to claim 5, further comprising
a correspondent router information receiving unit configured to receive a message disseminated in the correspondent network, the message including information on the correspondent router (CR, 1650), and
an extracting unit configured to extract the information on the correspondent router (CR, 1650) from the message received by the correspondent router information receiving unit.

8. A communication node (MN/MR, 1620) which has a function of route optimization and communicates with a correspondent node (CN, 1660), comprising:
a sending unit configured to send a predetermined message to the correspondent node (CN, 1660) in a process of establishing route optimization,
**characterized in** further comprising
a receiving unit configured to receive a response message which the correspondent node (CN, 1660) sends in response to the predetermined message, the response message including information on a correspondent router (CR, 1650) which is managing a correspondent network the correspondent node (CN, 1660) is part of, and
an extracting unit configured to extract the information on the correspondent router (CR, 1650) from the response message received by the receiving unit, and
wherein the sending unit sends a predetermined message to the correspondent router (CR, 1660) in a process of route optimization with the correspondent router (CR, 1660), based on the information on the correspondent router (CR, 1660) extracted by the extracting unit.
